# EUROPEAN PATENT APPLICATION

(11) **EP 2 339 420 A2**
(43) Date of publication of application: **29.06.2011**
(21) Application number: 10195824.7
(22) Date of filing: 17.12.2010
(51) Int. Cl.: G05B 23/02

(54) **System, device and method for monitoring a wind turbine using data quality inidicators**

(30) Priority: 22.12.2009 US 645214
(71) Applicant: General Electric Company, Schenectady, NY 12345 (US)
(72) Inventor: Singamsetti, V.N.S. Raju, 533221, Andhra Pradesh (IN); Srivastava, Vaibhav, Jhansi District 284401, Uttar Pradesh (IN); Majeti, Pavan Kumar, 500049, Hyderabad (IN)
(74) Representative: Bedford, Grant Richard

(57) **Abstract**

A system (200) for monitoring a wind turbine (100) is provided. The system includes a controller (220) operatively coupled to the wind turbine, the controller configured to generate an operating parameter having a parameter value received from a source and a data quality value, the data quality value indicating at least one of the source of the parameter value and a reliability of the parameter value. The server computing device (215) is coupled in signal communication with the controller and configured to acquire the operating parameter from the controller, and process the operating parameter based at least in part on the data quality value.

## Description

The subject matter described herein relates generally to monitoring wind turbines and, more particularly, to processing operating information for one or more wind turbines based on an indication of data quality.

Wind turbines utilize wind energy to generate or produce electrical power. Multiple wind turbines may be installed at a site to form a wind farm. To facilitate effective operation of a wind turbine, at least some known monitoring systems collect data, such as operating parameters, from one or more wind turbines and present the data to an operator, optionally performing one or more calculations on the data prior to presentation.

However, not all data from a wind turbine is of equal quality or reliability. For example, an operating parameter may be overridden by a human operator or may be based on a past signal from a sensor that has since become inoperable. Further, where operating information is calculated from multiple operating parameters, inaccuracy in one or more of those operating parameters may produce inaccuracy in the calculated operating information. Regardless, the calculated operating information may be valuable to an operator and should not be automatically discarded. Accordingly, a need exists for a system that processes operating information for a wind turbine based on the reliability of the data on which the operating information is based.

In one aspect according to the present invention, a system for monitoring a wind turbine is provided. The system includes a controller that is operatively coupled to the wind turbine. The controller is configured to generate an operating parameter having a parameter value received from a source and a data quality value. The data quality value indicates at least one of the source of the parameter value and a reliability of the parameter value. The system also includes a server computing device that is coupled in signal communication with the controller and configured to acquire the operating parameter from the controller. The server computing device is also configured to process the operating parameter based at least in part on the data quality value.

In another aspect, a device for monitoring a wind turbine is provided. The device includes a communication interface configured to receive a plurality of operating parameters for at least one wind turbine. Each operating parameter of the plurality of operating parameters includes a parameter value and a data quality value. The data quality value indicates at least one of a source of the parameter value and a reliability of the parameter value. The device also includes a processor coupled to the communication interface and programmed to process at least one operating parameter of the plurality of operating parameters based at least in part on the corresponding data quality value.

In yet another aspect, a method for monitoring a wind turbine is provided. The method includes creating, by a controller operatively coupled to the wind turbine, an operating parameter having a parameter value based on a signal received by the controller from a source. A data quality value is assigned to the operating parameter by a computing device. The data quality value indicates at least one of the source of the parameter value and a reliability of the parameter value. The operating parameter is processed based at least in part on the data quality value.

Various aspects and embodiments of the present invention will now be described in connection with the accompanying drawings, in which:
Fig. 1 is a perspective view of an exemplary wind turbine.
Fig. 2 is a block diagram illustrating an exemplary system for monitoring the wind turbine shown in Fig. 1.
Fig. 3 is a block diagram illustrating an exemplary wind turbine controller for use with the system shown in Fig. 2.
Fig. 4 is a block diagram illustrating an exemplary server computing device for use with the system shown in Fig. 2.
Fig. 5 is a block diagram illustrating an exemplary user computing device for use with the system shown in Fig. 2.
Fig. 6 is a flowchart of an exemplary method for monitoring a wind turbine.
Fig. 7 is a flowchart of an exemplary method for assigning a data quality value to an operating parameter.
Fig. 8 is an exemplary user interface for graphically representing operating parameters based on data quality values.
Fig. 9 illustrates exemplary single-parameter information panels for use in the user interface of Fig. 8.

Various of the embodiments described herein facilitate monitoring one or more wind turbines based on the reliability and/or quality of the operating data on which the operating information is based. The operating data are provided in the form of operating parameters, which include a parameter value and a data quality value. Operating parameters may include other attributes, such as a timestamp, a parameter type (e.g., wind speed, temperature, wind turbine power output, or site power output), and/or an identifier of a wind turbine or a wind turbine controller corresponding to the operating parameter.

In some embodiments, a wind turbine controller creates an operating parameter (e.g., based on a signal from a sensor) and transmits the operating parameter to a server computing device, which transmits the operating parameter to a user computing device. The wind turbine controller, the server computing device, and/or the user computing device may assign a data quality value to the operating parameter.

A data quality value generally indicates the reliability of an operating parameter. For example, a temperature value provided by a sensor one minute prior may be considered a more reliable indication of current temperature than a temperature value from one hour prior. Similarly, a temperature value entered by a human operator may be considered less reliable than a temperature value provided by a sensor. A data quality value may be determined based on a source of the data, an age of the data, and/or whether the data falls within a range of reasonable values, for example, though any attribute indicating a reliability of the data is contemplated. For example, available data quality values may include normal, estimated, forced, operator entered, component operator entered, alternate data source, stale, unreasonable, alarm, unsynchronized, communication failure, delayed, or questionable.

A data quality value of normal may be used to indicate that a parameter value is within an expected range and was provided by an expected source and in an expected manner. For example, an operating parameter based on a signal from a sensor that appears to be operating correctly may have a data quality of normal. A data quality value of normal reflects a high level of reliability.

A data quality value of estimated may be assigned to an operating parameter or value that is calculated using one or more other operating parameters as input. For example, if one input to the calculation has a non-normal data quality, the calculated value may have a data quality of estimated. A data quality value of estimated indicates a moderate level of reliability.

A data quality value of forced may be assigned to an operating parameter that is manually entered by a human operator. For example, the manually entered value may override a value that would normally be provided by a sensor signal. The forced data quality may be further subdivided into data quality values of operator entered and component operator entered. A data quality value of operator entered may indicate that a parameter value was entered or overridden by a human operator at a user computing device. For example, a user may modify a parameter value at the user computing device used to display the operating information. A data quality value of component operator entered may indicate that a parameter value was entered or overridden at a wind turbine controller. A data quality value of forced indicates a moderate or low level of reliability.

A data quality value of alternate data source may indicate that a value is provided by a non-standard source. For example, where a parameter value is typically provided by a sensor, the parameter value may be associated with a data quality of alternate data source if the parameter value is instead provided by simulation software. A data quality value of alternate data source indicates a low level of reliability.

A data quality value of stale may indicate that a parameter value is based on data that has not been updated as recently as expected. For example, if a sensor fails to provide a signal, or a wind turbine controller fails to provide an operating parameter, a recent operating parameter may be used, but with a data quality of stale. A data quality value of stale indicates a moderate level of reliability.

A data quality value of unreasonable may indicate that a parameter value is outside a range of reasonable values. The reasonable value range may be defined at a wind turbine controller, a server computing device, or a user computing device. For example, a reasonable value range for power output may be defined as 0 to 2,000 kilowatts (kW). A parameter value below 0 kW or above 2,000 kW would be assigned a data quality value of unreasonable. A data quality value of unreasonable indicates a low level of reliability.

A data quality value of alarm may indicate that a parameter value exceeds an alarm threshold value. For example, an alarm threshold value for power output may be defined as 1,500 kW. A data quality value of alarm may indicate a high or moderate level of reliability.

A data quality value of unsynchronized may indicate that one device reported a time value that is different from the time value reported by another device. For example, a wind turbine controller may provide an operating parameter with a time value that is substantially different from a current time value reported by a server computing device. A data quality value of unsynchronized indicates a moderate level of reliability.

A data quality value of communication failure may indicate a failure in communication with a device from which a signal or an operating parameter is expected. For example, a wind turbine controller creates an operating parameter with a data quality value of communication failure if a sensor fails to provide a signal. Similarly, a server computing device may assign a data quality value of communication failure to an operating parameter if a wind turbine controller fails to provide an operating parameter. A data quality value of communication failure indicates a low level of reliability.

A data quality value of delayed may indicate that a parameter value is older than expected. For example, a wind turbine controller, a server computing device, and/or a user computing device may be configured to receive a signal or an operating parameter according to a specified period. If a signal or operating parameter is not received after the period elapses, the most recent signal or operating parameter may be used with a data quality value of delayed. A data quality value of delayed indicates a moderate level of reliability.

A data quality value of questionable may be assigned if a source and/or reliability of the data is not known. For example, if an operating parameter includes an unrecognized data quality value, a data quality value of questionable may be assigned to the operating parameter. A data quality value of questionable may indicate a moderate or low level of reliability.

The data quality values described above are exemplary only. Any data quality values and associated levels of reliability suitable for use with the embodiments described herein may be defined. Data quality values may be categorized by level of reliability, and an operating parameter may be processed based on a level of reliability associated with the data quality value of the operating parameter.

Certain embodiments provided herein describe creating a graphical representation of an operating parameter. Graphical representations may include, without limitation, graphically rendered text, an icon, an image, and/or a chart or a portion thereof. Further, some embodiments facilitate graphically distinguishing such graphical representations from each other. Graphical distinction may be achieved by applying a fill pattern (e.g., hatching), a line pattern, a line weight, a color (e.g., a background color or a foreground color), a typeface, a font weight, an animation (e.g., blinking), and/or any other suitable means for distinguishing graphical elements from one another.

An exemplary technical effect of certain of the methods, system, and apparatus described herein includes at least one of: (a) creating an operating parameter having a parameter value based on a signal received by the controller from a source; (b) assigning a data quality value to the operating parameter, the data quality value indicating at least one of the source of the parameter value and a reliability of the parameter value; and (c) processing the operating parameter based at least in part on the data quality value.

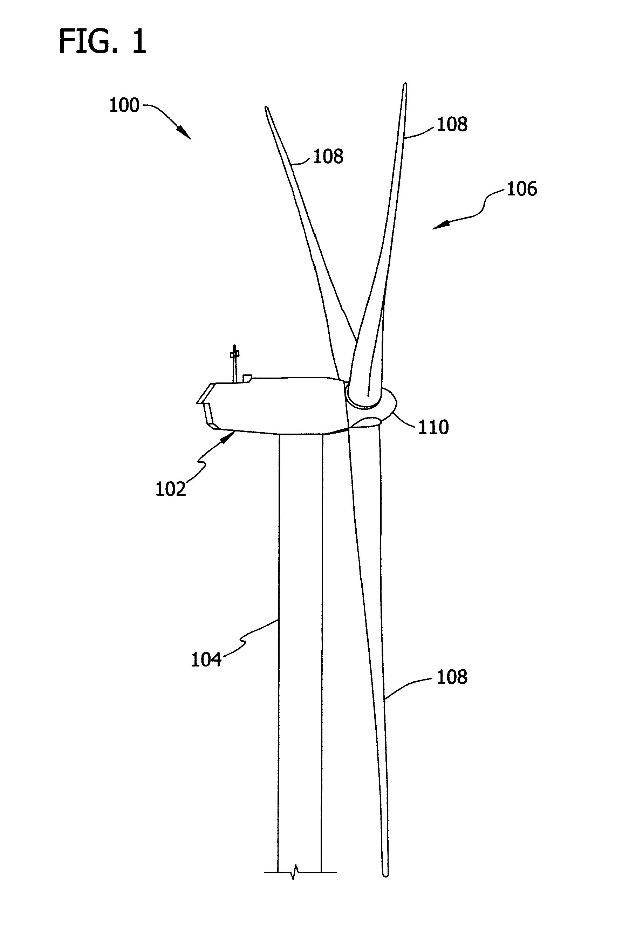

Fig. 1 is a perspective view of an exemplary wind turbine 100. Wind turbine 100 includes a nacelle 102 that houses a generator (not shown in Fig. 1). Nacelle 102 is mounted on a tower 104 (only a portion of tower 104 is shown in Fig. 1). Tower 104 may have any suitable height that facilitates operation of wind turbine 100 as described herein. In an exemplary embodiment, wind turbine 100 also includes a rotor 106 that includes three rotor blades 108 coupled to a rotating hub 110. Alternatively, wind turbine 100 may include any number of rotor blades 108 that enable operation of wind turbine 100 as described herein. In an exemplary embodiment, wind turbine 100 includes a gearbox (not shown) that is rotatingly coupled to rotor 106 and to the generator.

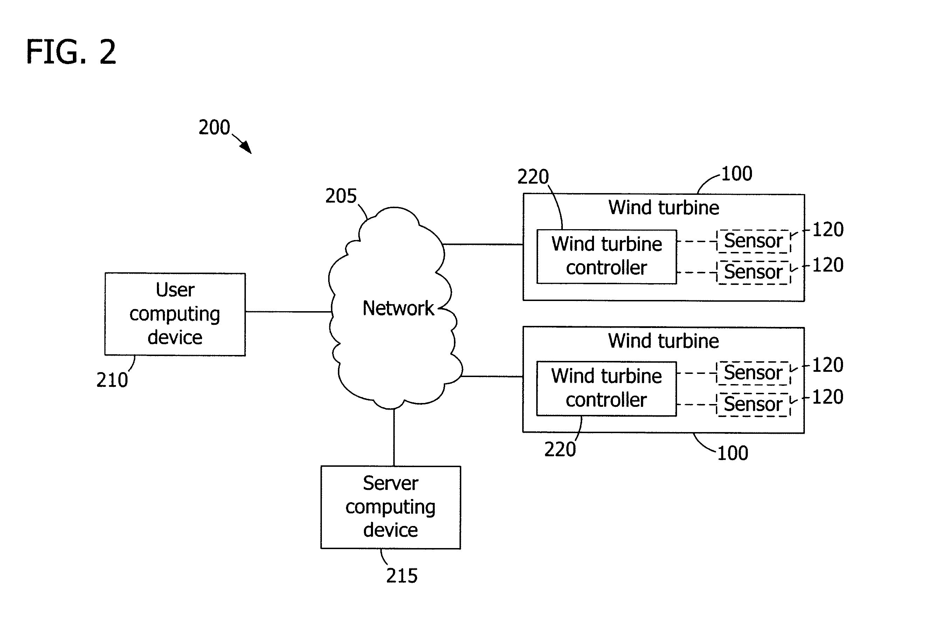

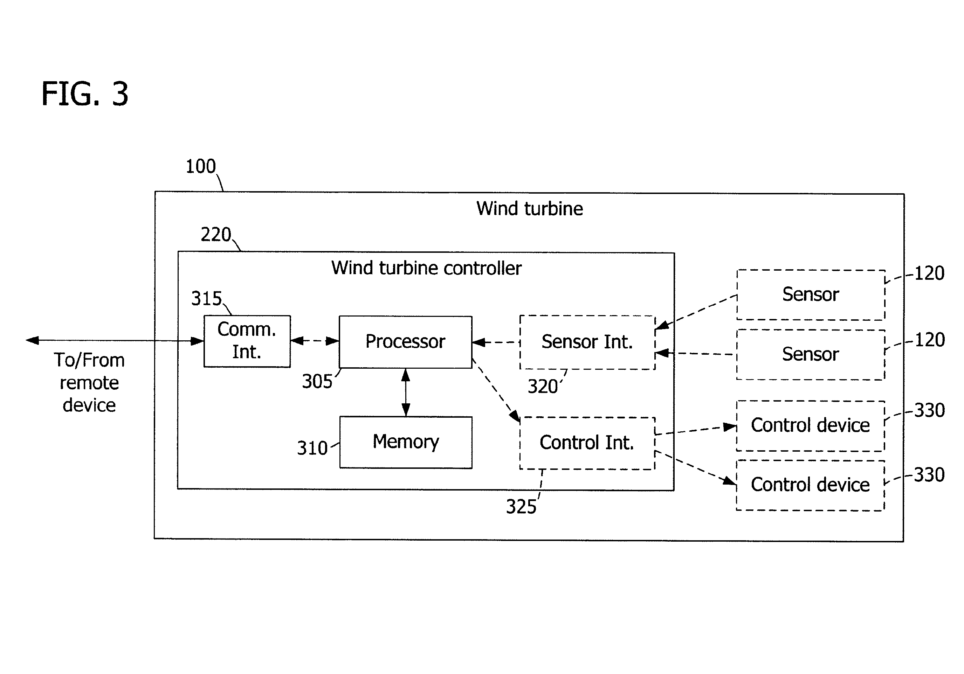

In some embodiments, wind turbine 100 includes one or more sensors 120 (shown in Figs. 2 and 3). Sensors 120 sense or detect wind turbine operating conditions. For example, sensor(s) 120 may include a wind speed and/or a direction sensor (e.g., an anemometer), an ambient air temperature sensor, an air density sensor, an atmospheric pressure sensor, a humidity sensor, a power output sensor, a blade pitch sensor, a turbine speed sensor, a gear ratio sensor, and/or any sensor suitable for use with wind turbine 100. Each sensor 120 is located according to its function. For example, an anemometer may be positioned on an outside surface of nacelle 102, such that the anemometer is exposed to air surrounding wind turbine 100. Each sensor 120 generates and transmits one or more signals corresponding to a detected operating condition. For example, an anemometer transmits a signal indicating a wind speed and/or a wind direction. Moreover, each sensor 120 may transmit a signal continuously, periodically, or only once, for example, though other signal timings are also contemplated. Furthermore, each sensor 120 may transmit a signal either in an analog form or in a digital form.

Fig. 2 is a block diagram illustrating an exemplary system 200 for monitoring one or more wind turbines 100. System 200 includes a network 205. For example, network 205 may include, without limitation, the Internet, a local area network (LAN), a wide area network (WAN), a wireless LAN (WLAN), a mesh network, and/or a virtual private network (VPN).

A user computing device 210, a server computing device 215, and one or more wind turbine controllers 220 are configured to be communicatively coupled to each other via network 205. In some embodiments, wind turbine controller 220 is configured to create an operating parameter having a parameter value and a data quality value. Server computing device 215 is configured to acquire the operating parameter from the wind turbine controller and to transmit the operating parameter (e.g., to user computing device 210). User computing device 210 is configured to receive the operating parameter from server computing device 215 and to display a graphical representation of the operating parameter based at least in part on the data quality value. Such embodiments are described in more detail below.

User computing device 210, server computing device 215, and wind turbine controller 220 communicate with each other and/or network 205 using a wired network connection (e.g., Ethernet or an optical fiber), a wireless communication means, such as radio frequency (RF), an Institute of Electrical and Electronics Engineers (IEEE) 802.11 standard (e.g., 802.11(g) or 802.11(n)), the Worldwide Interoperability for Microwave Access (WIMAX) standard, a cellular phone technology (e.g., the Global Standard for Mobile communication (GSM)), a satellite communication link, and/or any other suitable communication means. WIMAX is a registered trademark of WiMax Forum, of Beaverton, Oregon. IEEE is a registered trademark of Institute of Electrical and Electronics Engineers, Inc., of New York, New York.

In some embodiments, one or more wind turbines 100 and one or more server computing devices 215 are located in a wind farm, also referred to as a "site." Wind turbines 100 and server computing device 215 are communicatively coupled to a wind farm network (not shown in Fig. 2), and the wind farm network is communicatively coupled to network 205. In addition, or alternatively, one or more server computing devices 215 may be communicatively coupled to network 205 from a location other than a wind farm. In one embodiment, one or more server computing devices 215 is communicatively coupled to network 205 from a centralized monitoring and/or control facility. Server computing device 215 communicates with another server computing device 215 and/or one or more wind turbine controllers 220 at one or more wind farms. Such an embodiment facilitates monitoring multiple wind farms from a remote location.

Each of user computing device 210, server computing device 215, and wind turbine controller 220 includes a processor, as shown in Figs. 3-5. A processor may include a processing unit, such as, without limitation, an integrated circuit (IC), an application specific integrated circuit (ASIC), a microcomputer, a programmable logic controller (PLC), and/or any other programmable circuit. A processor may include multiple processing units (e.g., in a multi-core configuration). Each of user computing device 210, server computing device 215, and wind turbine controller 220 is configurable to perform the operations described herein by programming the corresponding processor. For example, a processor may be programmed by encoding an operation as one or more executable instructions and providing the executable instructions to the processor in a memory area (also shown in Figs. 3-5) coupled to the processor. A memory area may include, without limitation, one or more random access memory (RAM) devices, one or more storage devices, and/or one or more computer readable media.

Fig. 3 is a block diagram illustrating an exemplary wind turbine controller 220 for use with system 200. Wind turbine controller 220 includes a processor 305 for executing instructions. For example, instructions may be stored in a memory area 310, which is coupled to processor 305, to program processor 305.

Wind turbine controller 220 also includes a communication interface 315. Communication interface 315 is configured to be communicatively coupled to one or more remote devices, such as user computing device 210 and/or server computing device 215. For example, communication interface 315 may be communicatively coupled to a remote device via network 205.

In some embodiments, wind turbine controller 220 includes one or more sensor interfaces 320. Sensor interface 320 is configured to be communicatively coupled to one or more sensors 120 of wind turbine 100. Sensor interface 320 may be configured to receive one or more signals from each sensor 120.

In one embodiment, wind turbine controller 220 receives one or more signals from sensor 120 via sensor interface 320 and processes the signal(s) by processor 305 to create one or more operating condition values. In some embodiments, processor 305 is programmed (e.g., with executable instructions in memory area 310) to sample a signal produced by sensor 120. For example, processor 305 may receive a continuous signal from sensor 120 and, in response, produce an operating condition value based on the continuous signal periodically (e.g., once every five seconds). In some embodiments, processor 305 normalizes a signal received from sensor 120. For example, an output sensor may produce an analog signal with a parameter (e.g., voltage) that is directly proportional to a measured output wattage. Processor 305 may be programmed to convert the analog signal to an output wattage value.

In an exemplary embodiment, wind turbine controller 220 is configured to generate one or more operating parameters having a parameter value and a data quality value. The data quality value indicates a source and/or a reliability of the parameter value. For example, the data quality value may be normal, estimated, forced, operator entered, component operator entered, alternate data source, stale, unreasonable, alarm, unsynchronized, communication failure, delayed, or questionable. Wind turbine controller 220 may be configured to provide operating parameters to a remote device, such as server computing device 215 or user computing device 210, via communication interface 315. In one embodiment, wind turbine controller 220 is configured to receive a signal from a sensor 120 and to create an operating parameter having a parameter value based on the received signal and having a data quality value of normal.

In some embodiments, wind turbine controller 220 also includes a control interface 325, which is configured to be communicatively coupled to one or more control devices 330 of wind turbine 100. Control devices 330 are configured to control an operation of wind turbine 100 and may include, without limitation, a brake, a relay, a motor, and/or a servomechanism. In one embodiment, wind turbine control interface 325 is configured to operate control device 330 including a brake to prevent hub 110 (shown in Fig. 1) from rotating. In addition, or in the alternative, wind turbine control interface 325 may operate a control device 330 including a blade pitch servomechanism to adjust one or more rotor blades 108 (shown in Fig. 1) to a desired and/or predetermined pitch. The brake and the blade pitch servomechanism may be operated by the same control device 330 or a first control device 330 and a second control device 330. In one embodiment, wind turbine control interface 325 is configured to control an operation of wind turbine 100 via control device 330 based on a parameter value and a data quality value of an operating parameter. For example, wind turbine control interface 325 may be configured to control an operation of wind turbine 100 based on operating parameters having a data quality value of normal and/or alarm.

Wind turbine controller 220 may interact with a remote device, such as user computing device 210 or server computing device 215 (shown in Figs. 2, 4, and 5). In some embodiments, server computing device 215 is communicatively coupled to a plurality of wind turbines 100 via network 205, and one or more user computing devices 210 are communicatively coupled to server computing device 215.

Various connections are available between sensor interface 320 and sensor 120 and between wind turbine control interface 325 and wind turbine control device 330. Such connections include, without limitation, an electrical conductor, a low-level serial data connection, such as Recommended Standard (RS) 232 or RS-485, a high-level serial data connection, such as Universal Serial Bus (USB) or Institute of Electrical and Electronics Engineers (IEEE) 1394 (a/k/a FIREWIRE), a parallel data connection, such as IEEE 1284 or IEEE 488, a short-range wireless communication channel such as BLUETOOTH, a private (e.g., accessible only inside or proximate to wind turbine 100) network connection, whether wired or wireless, and/or any other connection type suitable for carrying communication and/or data signals. BLUETOOTH is a registered trademark of Bluetooth SIG, Inc., of Bellevue, Washington.

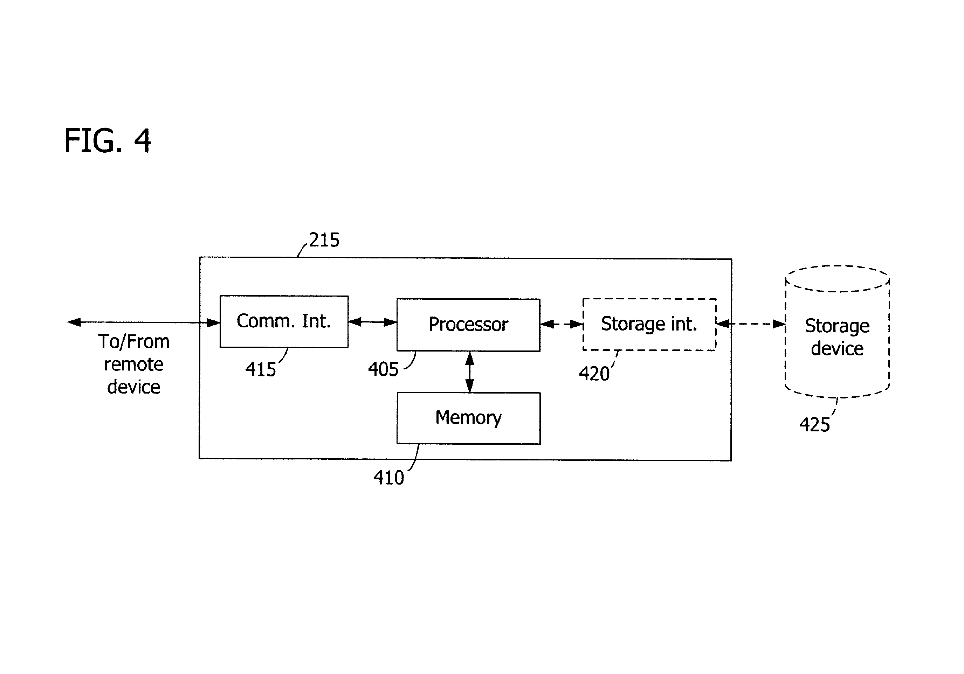

Fig. 4 is a block diagram illustrating an exemplary server computing device 215 for use with system 200. Server computing device 215 includes a processor 405 for executing instructions. Instructions may be stored in a memory area 410, for example. Instructions may be provided for executing server applications including, without limitation, a real-time wind turbine monitoring system and/or OPC (formerly Object Linking and Embedding for Process Control) server software.

Processor 405 is operatively coupled to a communication interface 415 such that server computing device 215 is capable of communicating with a remote device, such as one or more user computing devices 210, wind turbine controllers 220, and/or other server computing devices 215. Processor 405 may also be operatively coupled to a storage device 420. Storage device 420 is any computer-operated hardware suitable for storing and/or retrieving data. In some embodiments, storage device 420 is integrated in server computing device 215. For example, server computing device 215 may include one or more hard disk drives as storage device 420. In other embodiments, storage device 420 is external to server computing device 215 and may be accessed by a plurality of server computing devices 215. For example, storage device 420 may include multiple storage units, such as hard disks or solid state disks, in a redundant array of inexpensive disks (RAID) configuration. Storage device 420 may include a storage area network (SAN) and/or a network attached storage (NAS) system.

In some embodiments, processor 405 is operatively coupled to storage device 420 via a storage interface 425. Storage interface 425 is any component capable of providing processor 405 with access to storage device 420. Storage interface 425 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 405 with access to storage device 420.

In an exemplary embodiment, processor 405 is programmed to acquire one or more operating parameters from wind turbine controller 220, and communication interface 415 is configured to transmit the operating parameter to a remote device. For example, communication interface 415 may be configured to transmit the operating parameter to user computing device 210 or another server computing device 215. Memory area 410 and/or storage device 420 may be configured to store one or more operating parameters. For example, processor 405 may store a log of operating parameters in memory area 410 and/or storage device 420.

In some embodiments, server computing device 215 is configured to modify the data quality value of an operating parameter. In one embodiment, processor 405 is programmed to modify the data quality value of the operating parameter based on a modification of the parameter value by an operator of server computing device 215, a communication delay, a communication outage, the parameter value being outside a reasonable value range, and/or the parameter value exceeding an alarm threshold value. In one example, communication interface 415 is configured to repeatedly acquire an operating parameter from wind turbine controller 220. If communication with wind turbine controller 220 fails, and/or if wind turbine controller 220 fails to provide an operating parameter, processor 405 is programmed to create an operating parameter with a data quality value of communication failure or delayed and a parameter value indicating that no actual value is available, such as a parameter value of zero, null, or an empty string. In addition, or in the alternative, processor 405 is programmed to identify within memory area 410 an operating parameter previously acquired from wind turbine controller 220 (e.g., having a data quality value of normal), assign to the operating parameter a data quality value of stale, and transmit the operating parameter to a remote device.

Processor 405 may be programmed to create a calculated operating parameter based on one or more operating parameters, which may be referred to as component operating parameters. For example, to create a wind farm power output operating parameter, processor 405 may identify within memory area 410 a plurality of operating parameters with a parameter type of power output, each of which corresponds to a wind turbine controller 220 of a wind farm. Processor 405 may add the parameter values of the identified operating parameters to calculate a combined power output and create an operating parameter with a parameter value equal to the combined power output parameter value.

In some embodiments, server computing device 215 is configured to create a calculated operating parameter using weights based on reliability. For example, processor 405 may be programmed to assign a weight to each of the component operating parameters based on the corresponding data quality values. Processor 405 may be further programmed to calculate a calculated operating parameter based at least in part on the assigned weights and the parameter values corresponding to the component operating parameters.

In some embodiments, a calculated operating parameter includes a data quality value based on the data quality values of the corresponding component operating parameters. For example, processor 405 may be programmed to, if the component operating parameters include both normal and non-normal data quality values, assign to the calculated operating parameter a data quality value of estimated.

In some embodiments, server computing device 215 is communicatively coupled to a plurality of wind turbine controllers 220 associated with a plurality of wind turbines 100. Processor 405 is programmed to calculate the calculated operating parameter based at least in part on an operating parameter from each of the first wind turbine controller and the second wind turbine controller.

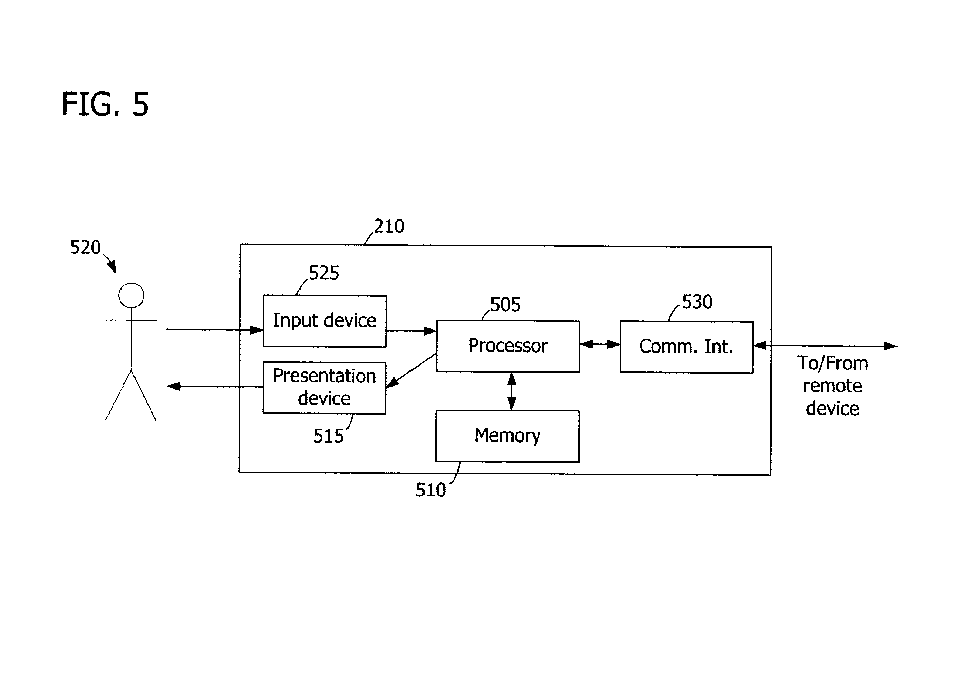

Fig. 5 is a block diagram illustrating an exemplary user computing device 210 for use with system 200. User computing device 210 includes a processor 505 for executing instructions. In some embodiments, executable instructions are stored in a memory area 510. Memory area 510 is any device allowing information, such as executable instructions and/or other data, to be stored and retrieved.

User computing device 210 also includes at least one presentation device 515 for presenting information to user 520. Presentation device 515 is any component capable of conveying information to user 520. Presentation device 515 may include, without limitation, a display device (e.g., a liquid crystal display (LCD), organic light emitting diode (OLED) display, or "electronic ink" display) and/or an audio output device (e.g., a speaker or headphones). In some embodiments, presentation device 515 includes an output adapter, such as a video adapter and/or an audio adapter. An output adapter is operatively coupled to processor 505 and configured to be operatively coupled to an output device, such as a display device or an audio output device.

In some embodiments, user computing device 210 includes an input device 525 for receiving input from user 520. Input device 525 may include, for example, a keyboard, a pointing device, a mouse, a stylus, a touch sensitive panel (e.g., a touch pad or a touch screen), a gyroscope, an accelerometer, a position detector, and/or an audio input device. A single component, such as a touch screen, may function as both an output device of presentation device 515 and input device 525. User computing device 210 also includes a communication interface 530, which is configured to be communicatively coupled to network 205, server computing device 215, and/or wind turbine controllers 220.

Stored in memory area 510 are, for example, computer readable instructions for providing a user interface to user 520 via presentation device 515 and, optionally, receiving and processing input from input device 525. A user interface may include, among other possibilities, a web browser and/or a client application. Web browsers and client applications enable users, such as user 520, to display and interact with media and other information from a remote device, such as server computing device 215. Exemplary client applications include, without limitation, an OPC client and/or a human-machine interface (HMI) for managing one or more wind turbines 100.

In an exemplary embodiment, communication interface 530 is configured to receive, from a remote device such as server computing device 215, one or more operating parameters for one or more wind turbines 100. Each operating parameter includes a parameter value and a data quality value. The data quality value indicates a source of the parameter value and/or a reliability of the parameter value. For example, the data quality value may have a value of normal, estimated, forced, operator entered, component operator entered, alternate data source, stale, unreasonable, alarm, unsynchronized, communication failure, delayed, or questionable.

Processor 505 is programmed to process at least one operating parameter of the received operating parameters based at least in part on the corresponding data quality value. For example, processor 505 may be programmed to create a graphical representation of one or more operating parameters based at least in part on the corresponding parameter values and/or data quality values, and presentation device 515 may be configured to display the graphical representation. In addition, or alternatively, processor 505 may be programmed to calculate a calculated operating parameter based on one or more data quality values.

In some embodiments, communication interface 530 is configured to receive multiple operating parameters. Processor 505 is programmed to assign a weight to each operating parameter based on a corresponding data quality value. Processor 505 is further programmed to calculate a calculated operating parameter based on at least the parameter values and the assigned weights corresponding to the operating parameters. Such an embodiment facilitates calculating a weighted average, for example, wherein the weight assigned to a parameter value corresponds to a reliability of the parameter value. In one embodiment, if at least one of the operating parameters has a data quality value other than normal, processor 505 is programmed to assign a data quality value of estimated to the calculated operating parameter.

In one embodiment, communication interface 530 receives a plurality of operating parameters of the same type and corresponding to the same wind turbine 100, but having different timestamps. Such a collection of operating parameters represents a recent history of parameter values for the type and the wind turbine 100. In addition, or alternatively, communication interface 530 may receive a plurality of operating parameters of the same type and having a substantially equal timestamp, but corresponding to different wind turbines 100 in a wind farm. Such a collection of operating parameters represents an instantaneous state of the wind farm with respect to the parameter type. Other collections of operating parameters are also contemplated.

In such embodiments, processor 505 is programmed to create a graphical representation of each received operating parameter based at least in part on the parameter value and/or the data quality value of the operating parameter. In addition, processor 505 may combine the graphical representations of the operating parameters into a single graphical representation. For example, if a collection of operating parameters representing a recent history of parameter values is provided, processor 505 may create a graphical representation of each operating parameter in the collection by creating a chart depicting each of the operating parameters.

In one embodiment, for each operating parameter in the collection, processor 505 plots a point in a chart based on a timestamp and a parameter value of the operating parameter. The chart may include a line chart, a bar chart, and/or any other chart suitable for depicting operating parameters. In another embodiment, processor 505 creates a pie chart depicting each operating parameter as a portion of a combined total (e.g., calculated by adding the parameter values of the operating parameters in the collection). The graphical representation of each operating parameter may be based at least in part on a data quality value of the operating parameter. For example, a point in a chart representing an operating parameter with a normal data quality may be graphically distinguished from a point representing an operating parameter with a non-normal data quality using a fill pattern, a line pattern, a line weight, a color, and/or an animation.

In some embodiments, processor 505 is programmed to create a calculated operating parameter, as described above with respect to server computing device 215. Processor 505 may be programmed to create a graphical representation of the calculated operating parameter.

In an exemplary embodiment, presentation device 515 is configured to display a graphical representation of an operating parameter according to a data quality value of the operating parameter. More particularly, presentation device 515 may be configured to graphically distinguish a graphical representation of an operating parameter with one data quality value from a graphical representation of an operating parameter with a different data quality value. For example, an operating parameter with a data quality value of normal may be depicted in black, and an operating parameter with a data quality value of estimated may be depicted in blue. In addition, or alternatively, server computing device 215 may create one or more graphical representations of operating parameters, as described above, and transmit the graphical representations to user computing device 210 for display.

User computing device 210 may facilitate manual entry or overriding of parameter values by user 520. In one embodiment, input device 525 is configured to receive, from user 520, an entered value for an operating parameter. Processor 505 is programmed to assign the entered value as the parameter value of the operating parameter and assign to the operating parameter a data quality value of forced or operator entered.

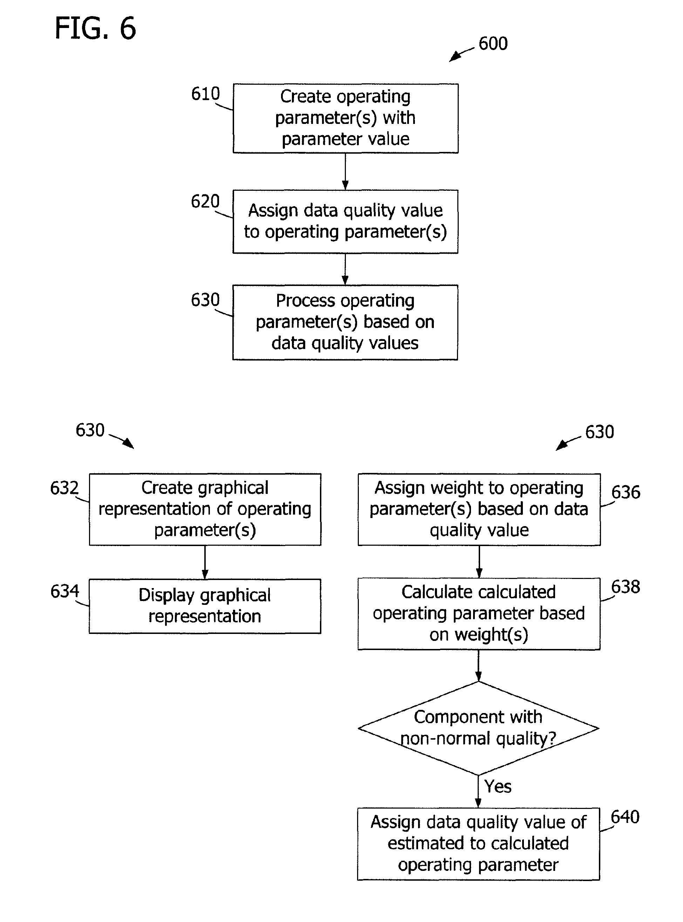

Fig. 6 is a flowchart of an exemplary method 600 for monitoring one or more wind turbines, such as wind turbine 100. Method 600 includes creating 610, by a controller that is operatively coupled to the wind turbine, one or more operating parameters having a parameter value and a data quality value. The parameter value is based on a signal received by the controller from a source. The source of the parameter value may include, without limitation, a sensor, a simulator, a human operator, and/or a previous operating parameter.

A data quality value is assigned 620 to each of the operating parameters by a computing device. The data quality value indicates a source of the parameter value and/or a reliability of the parameter value. In one embodiment, data quality values are grouped by reliability. For example, a high level of reliability may be indicated by a data quality value of normal or alarm. A moderate level of reliability may be indicated by a data quality value of estimated, forced, operator entered, component operator entered, stale, unsynchronized, delayed, or questionable. A low level of reliability may be indicated by a data quality vale of alternate data source, unreasonable, or communication failure.

The operating parameters are processed 630 based at least in part on the data quality values. In one embodiment, a graphical representation of the operating parameter(s) is created 632 based at least in part on the data quality value, and the graphical representation is displayed 634 using a presentation device. Creating 632 a graphical representation of an operating parameter may include graphically distinguishing operating parameters based on data quality values. For example, a graphical representation of an operating parameter with one data quality value may be graphically distinguished from a graphical representation of an operating parameter with a different data quality value.

In another embodiment, a weight is assigned 636 to each operating parameter based on a corresponding data quality value. A calculated operating parameter is calculated 638 based on the assigned weight and the parameter value corresponding to each operating parameter. If one or more component operating parameters includes a non-normal data quality value, a data quality value of estimated may be assigned 640 to the calculated operating parameter.

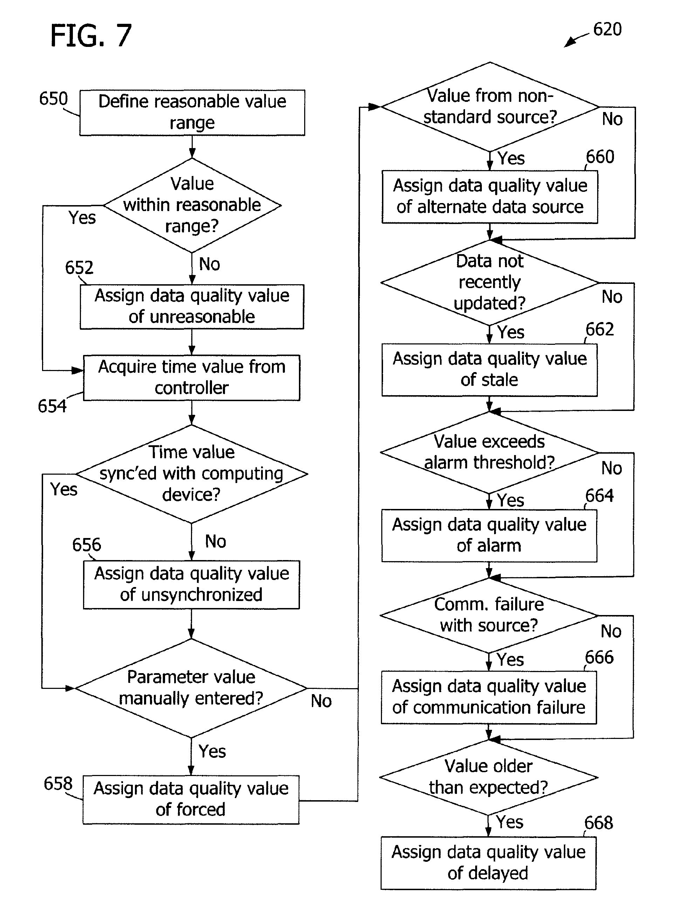

Fig. 7 is a flowchart of an exemplary method for assigning 620 a data quality value to an operating parameter based at least in part on an attribute of the operating parameter. In an exemplary embodiment, the operating parameter includes, by default, a data quality value of normal.

A reasonable value range is defined 650. If the parameter value of the operating parameter is not within the reasonable value range, a data quality value of unreasonable is assigned 652 to the operating parameter. If the parameter value is within the reasonable value range, the data quality value is left unchanged.

A first time value is acquired 654 from the wind turbine controller. For example, the first time value may be provided as a timestamp of an operating parameter or may be provided in a separate transmission by the server computing device. If the first time value is not synchronized with (e.g., substantially equal to) a second time value provided by the computing device (e.g., based on a clock associated with the processor of the computing device), a data quality value of unsynchronized is assigned 656 to the operating parameter. Otherwise, the data quality value is left unchanged.

If the parameter value of the operating parameter was manually entered (e.g., by a human operator at a wind turbine controller), a data quality value of forced is assigned 658 to the operating parameter. If the parameter value was provided by a non-standard source, a data quality value of alternate data source is assigned 660 to the operating parameter. If the parameter value was not recently updated, a data quality value of stale is assigned 662 to the operating parameter. If the parameter value exceeds an alarm threshold value, a data quality value of alarm is assigned 664 to the operating parameter. If communication with the source of the operating parameter fails, a data quality value of communication failure is assigned 666. If the parameter value is associated with a timestamp that is older than expected, a data quality value of delayed is assigned 668 to the operating parameter.

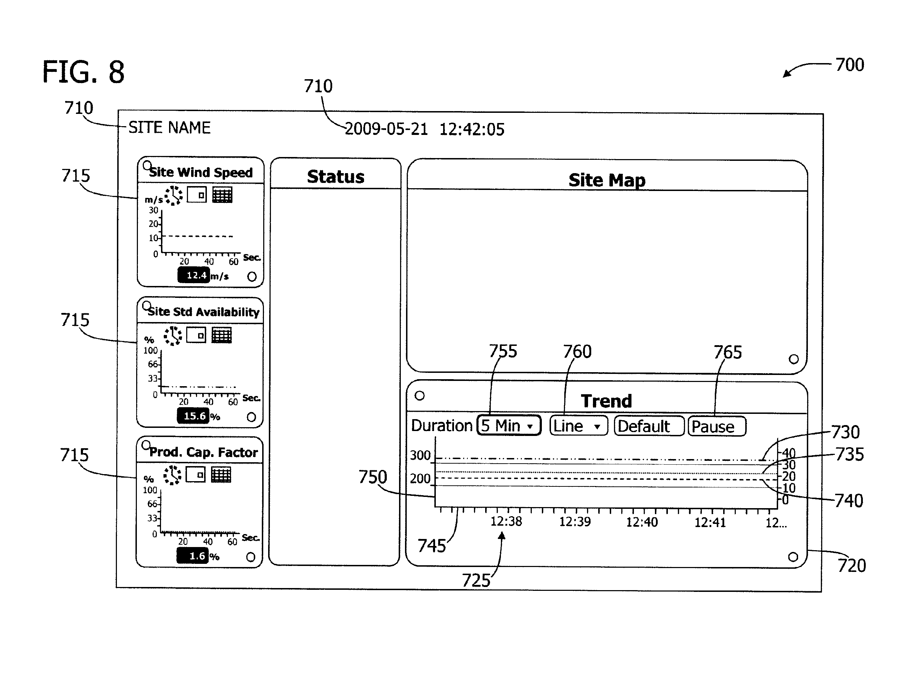

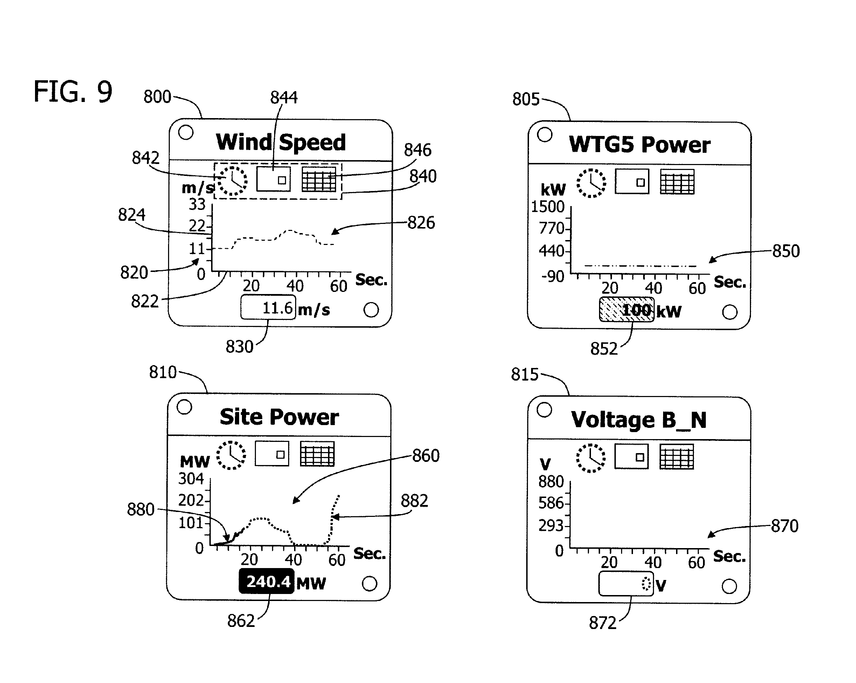

Fig. 8 is an exemplary user interface 700 for graphically representing operating parameters based on data quality values. User interface 700 includes a site name 705 and a current date and time 710. User interface 700 also includes one or more single-parameter information panels 715 and a multi-parameter information panel 720. Single-parameter information panels 715 are described in more detail below with regard to Fig. 9.

Multi-parameter information panel 720 may include a graph 725 of operating parameter values over time. In an exemplary embodiment, graph 725 includes a first trend line 730, a second trend line 735, and a third trend line 740, which graphically represent operating parameter values of a first type, a second type, and a third type, respectively, over a suitable or selected time period, such as during the previous five minutes. In one example, first trend line 730 graphically represents site power output operating parameters, second trend line 735 graphically represents site wind speed operating parameters, and third trend line 740 graphically represents site temperature operating parameters.

First trend line 730, second trend line 735, and third trend line 740 may include a plurality of points. Each point corresponds to an operating parameter. Each point is positioned on an x-axis 745 of graph 725 based on a timestamp of the operating parameter and on a y-axis 750 of graph 725 based on a parameter value of the operating parameter. In some embodiments, user interface 700 continuously or periodically updates single-parameter information panels 715 and/or multi-parameter information panel 720, facilitating real-time monitoring of operating parameters.

First trend line 730, second trend line 735, and third trend line 740 are graphically distinguished from each other. In an exemplary embodiment, graphical distinction is achieved by applying line patterns. A portion or point of first trend line 730, second trend line 735, and/or third trend line 740 may also be graphically distinguished from other portions or points based on a data quality value of the operating parameter(s) corresponding to the portion or point.

In an exemplary embodiment, multi-parameter information panel 720 includes a duration selector 755, a graph type selector 760, and a pause button 765. Duration selector 755 includes a plurality of durations (e.g., 1 minute, 5 minutes, and 30 minutes). In response to a duration being selected in duration selector 755, user interface 700 adjusts x-axis 745 of graph 725 to correspond to the selected duration. For example, if a duration of 30 minutes is selected in duration selector 755, and the current time is 12:42, graph 725 displays operating parameters with timestamps between 12:12 and 12:42.

Graph type selector 760 includes a plurality of graph types (e.g., line, scatter, and bar). User interface 700 displays graph 725 based on the selected graph type. For example, if a graph type of line is selected, graph 725 includes first trend line 730, second trend line 735, and third trend line 740, as illustrated. If a graph type of scatter is selected, first trend line 730, second trend line 735, and third trend line 740 are each replaced by a series of discrete points not connected by a line.

In response to an engagement of pause button 765, user interface 700 ceases updating multi-parameter information panel 720. If pause button 765 is engaged again, user interface 700 resumes updating multi-parameter information panel 720.

Fig. 9 illustrates examples of a wind speed panel 800, a wind turbine power panel 805, a site power panel 810, and a voltage panel 815 for displaying graphical representations of operating parameters. One or more of wind speed panel 800, wind turbine power panel 805, site power panel 810, and voltage panel 815 may be included in user interface 700. Wind speed panel 800 includes a graph 820 depicting wind speed over time. Graph 820 includes an x-axis 822 corresponding to time and a y-axis 824 corresponding to wind speed. Graph 820 also includes a trend line 826, which connects a plurality of points (not visible in Fig. 9). Each point graphically represents one or more operating parameters. For example, a point may represent an operating parameter from one wind turbine controller or a calculated operating parameter representing an average of parameter values from a plurality of wind turbine controllers.

In an exemplary embodiment, each operating parameter includes a timestamp and a parameter value. Each operating parameter is represented in graph 820 by a point positioned along x-axis 822 based on the timestamp and along y-axis 824 based on the parameter value. Wind speed panel 800 also includes a value field 830. Value field 830 includes a wind speed value. For example, value field 830 may include a parameter value from a most recently received operating parameter (an instantaneous value) or a moving average of parameter values from a plurality of recently received operating parameters, such as five most recently received operating parameters, or operating parameters received in the previous ten seconds.

In an exemplary embodiment, operating parameters represented by trend line 826 and/or value field 830 also include a data quality value. Trend line 826 and value field 830 indicate a data quality value by graphical distinction. For example, a portion of trend line 826 may have a color or a line pattern corresponding to a data quality value. In an exemplary embodiment, trend line 826 graphically represents operating parameters with a data quality value of normal and is displayed as a black, evenly hashed line. Similarly, value field 830 graphically represents one or more operating parameters with a data quality value of normal and is displayed as black text on a white background.

Wind speed panel 800 also includes a duration selector 840. In an exemplary embodiment, duration selector 840 includes a one-minute selector 842, a one-day selector 844, and a one-month selector 846. X-axis 822 of graph 820 is adjusted based on a selected duration from duration selector 840. For example, if one-minute selector 842 is selected, x-axis 822 corresponds to approximately sixty seconds, and trend line 826 graphically represents operating parameters with timestamps in the previous approximately sixty seconds.

Wind turbine power panel 805 includes a trend line 850 and a value field 852, which graphically represent operating parameters indicating a power output of a wind turbine over time. In an exemplary embodiment, the operating parameters graphically represented by trend line 850 and value field 852 have a data quality value of forced. Trend line 850 is graphically distinguished from trend line 826 of wind speed panel 800 by having a different line pattern. Specifically, trend line 850 is displayed as an unevenly hashed line. Value field 852 is graphically distinguished from value field 830 by having a different background pattern. In an exemplary embodiment, value field 852 has a background pattern of diagonal hatching.

Site power panel 810 includes a trend line 860 and a value field 862, which graphically represent operating parameters indicating site-wide power output over time. The graphically represented operating parameters are calculated operating parameters. For example, a site-wide power output operating parameter may be created by acquiring a set of component operating parameters. Each component operating parameter indicates a power output for a wind turbine at a site. The parameter values from the component operating parameters are added to create a parameter value for the site-wide power output operating parameter. In an exemplary embodiment, one or more of the component operating parameters has a data quality value of forced. As a result, the calculated operating parameters have a data quality value of estimated. To indicate a data quality value of estimated, trend line 860 is displayed generally as a dotted line, and value field 862 is displayed as white text on a black background.

Voltage panel 815 includes a graph 870 and a value field 872, which graphically represent operating parameters indicating voltage output for a wind turbine over time. In an exemplary embodiment, voltage output operating parameters have been received, but the operating parameters include a parameter value of 0 and a data quality value of communication failure. Graph 870 includes no trend line because no valid parameter values are available for graphical representation. To indicate a data quality value of communication failure, value field 872 is displayed as dotted text on a white background.

In some embodiments, different portions of a trend line represent operating parameters with different data quality values. For example, trend line 860 is shown with a first portion 880 representing operating parameters with a first data quality value and a second portion 882 representing operating parameters with a second data quality value. As shown in Fig. 9, first portion 880 and second portion 882 are graphically distinguished from each other through distinct line patterns.

Figs. 7 and 8 illustrate embodiments in which graphical elements are graphically distinguished by line pattern and fill pattern, for example. In addition, or alternatively, user interface 700, wind speed panel 800, wind turbine power panel 805, site power panel 810, and voltage panel 815 may apply other means of graphical distinction including, without limitation, color, animation, and/or icons.

The methods described herein may be encoded as executable instructions embodied in a computer readable medium including, without limitation, a memory area of a computing device. Such instructions, when executed by a processor, cause the processor to perform at least a portion of the methods described herein.

Exemplary embodiments of a wind turbine control system are described above in detail. The system, devices, wind turbine, and included assemblies are not limited to the specific embodiments described herein, but rather each component may be utilized independently and separately from other components described herein.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system for monitoring a wind turbine, the system comprising:
   a controller operatively coupled to the wind turbine, the controller configured to generate an operating parameter having a parameter value received from a source and a data quality value, the data quality value indicating at least one of the source of the parameter value and a reliability of the parameter value; and,
   a server computing device coupled in signal communication with the controller and configured to:
      acquire the operating parameter from the controller; and,
      process the operating parameter based at least in part on the data quality value.
2. A system in accordance with clause 1, wherein the operating parameter is a first operating parameter having a first parameter value and a first data quality value, and the server computing device is further configured to:
   assign a first weight to the first operating parameter based on the first data quality value;
   assign, to a second operating parameter including a second parameter value and a second data quality value, a second weight based on the second data quality value; and,
   calculate a calculated operating parameter based at least in part on the first weight, the first parameter value, the second weight, and the second parameter value.
3. A system in accordance with any preceding clause, wherein the operating parameter is a first operating parameter having a first parameter value and a first data quality value, the system further comprising a user computing device coupled in signal communication with the server computing device and configured to:
   receive the first operating parameter from the server computing device; and,
   display, via a presentation device, a graphical representation of the first operating parameter based at least in part on the first data quality value, wherein the first operating parameter is graphically distinguished from a second operating parameter having a second data quality value.
4. A system in accordance with any preceding clause, wherein the server computing device is further configured to modify the data quality value of the operating parameter based on at least one of the following: a modification of the parameter value by an operator of the server computing device, a communication delay, a communication outage, the parameter value being outside a reasonable value range, and the parameter value exceeding an alarm threshold value.
5. A system in accordance with any preceding clause, wherein the server computing device is further configured to:
   acquire an operating parameter from the controller at a plurality of times; and,
   if acquiring an operating parameter fails at a first time of the plurality of times, transmit an operating parameter acquired at a previous time with a data quality value of stale.
6. A system in accordance with any preceding clause, wherein the server computing device is further configured to calculate a calculated operating parameter based on a plurality of operating parameters; and,
   if the plurality of operating parameters includes at least one operating parameter having a data quality value of normal and at least one operating parameter having a data quality value other than normal, assign to the calculated operating parameter a data quality value of estimated.
7. A system in accordance with any preceding clause, wherein the controller is a first controller operatively coupled to a first wind turbine, the system further comprising a second controller operatively coupled to a second wind turbine, wherein the server computing device is configured to calculate the calculated operating parameter based at least in part on an operating parameter from each of the first controller and the second controller.
8. A device for monitoring a wind turbine, the device comprising:
   a communication interface configured to receive a plurality of operating parameters for at least one wind turbine, each operating parameter of the plurality of operating parameters including a parameter value and a data quality value, the data quality value indicating at least one of a source of the parameter value and a reliability of the parameter value; and,
   a processor coupled to the communication interface and programmed to process at least one operating parameter of the plurality of operating parameters based at least in part on the corresponding data quality value.
9. A device in accordance with any preceding clause, wherein the processor is further programmed to create a graphical representation of each operating parameter based at least in part on the parameter value and the data quality value of the operating parameter.
10. A device in accordance with any preceding clause, wherein a first operating parameter of the plurality of operating parameters has a first data quality value, a second operating parameter of the plurality of operating parameters has a second data quality value different from the first data quality value, and the processor is programmed to create a graphical representation of each operating parameter by creating a first graphical representation of the first operating parameter and a second graphical representation of the second operating parameter, the second graphical representation graphically distinguished from the first graphical representation.
11. A device in accordance with any preceding clause, wherein the plurality of operating parameters includes a first operating parameter having a first parameter value and a first data quality value and a second operating parameter having a second parameter value and a second data quality value, and the processor is further programmed to:
   assign a first weight to the first operating parameter based on the first data quality value;
   assign a second weight to the second operating parameter based on the second data quality value; and,
   calculate a calculated operating parameter based on at least the first weight, the first parameter value, the second weight, and the second parameter value.
12. A device in accordance with any preceding clause, wherein if at least one of the first operating parameter and the second operating parameter has a data quality value other than normal, assign a data quality value of estimated to the calculated operating parameter.
13. A device in accordance with any preceding clause, further comprising an input device configured to receive, from a user, an entered value for a first operating parameter of the plurality of operating parameters, wherein the processor is further programmed to:
   assign the entered value as the parameter value of the first operating parameter;
      and,
   assign to the first operating parameter a data quality value of operator entered.
14. A method for monitoring a wind turbine, the method comprising:
   creating, by a controller operatively coupled to the wind turbine, an operating parameter having a parameter value based on a signal received by the controller from a source;
   assigning, by a computing device, a data quality value to the operating parameter, the data quality value indicating at least one of the source of the parameter value and a reliability of the parameter value; and,
   processing the operating parameter based at least in part on the data quality value.
15. A method in accordance with any preceding clause, wherein processing the operating parameter comprises:
   creating, by a computing device, a graphical representation of the operating parameter based at least in part on the data quality value; and,
   displaying the graphical representation using a presentation device.
16. A method in accordance with any preceding clause, wherein assigning a data quality value to the operating parameter comprises:
   defining a reasonable value range; and,
   if the parameter value is not within the reasonable value range, assigning to the operating parameter a data quality value of unreasonable.
17. A method in accordance with any preceding clause, wherein assigning a data quality value to the operating parameter comprises:
   acquiring a first time value from the controller; and,
   if the first time value is not synchronized with a second time value provided by the computing device, assigning to the operating parameter a data quality value of unsynchronized.
18. A method in accordance with any preceding clause, wherein the operating parameter is a first operating parameter from a first controller operatively coupled to a first wind turbine, the method further comprising:
   creating, by a second controller operatively coupled to a second wind turbine, a second operating parameter having a parameter value and a data quality value; and,
   creating, by the computing device, a graphical representation of the first operating parameter and the second operating parameter.
19. A method in accordance with any preceding clause, wherein the first operating parameter has a first data quality value, the second operating parameter has a second data quality value different from the first data quality value, and a first graphical representation of the first operating parameter and a second graphical representation of the second operating parameter distinguished from the first graphical representation are created.
20. A method in accordance with any preceding clause, wherein the operating parameter is a first operating parameter having a first parameter value and a first data quality value, and processing the first operating parameter comprises:
   assigning a first weight to the first operating parameter based on the first data quality value;
   assigning, to a second operating parameter having a second parameter value and a second data quality value, a second weight based on the second data quality value; and,
   calculating a calculated operating parameter based at least in part on the first weight, the first parameter value, the second weight, and the second parameter value.

## Claims

1. A system (200) for monitoring a wind turbine (100), the system comprising:
a controller (220) operatively coupled to the wind turbine, the controller configured to generate an operating parameter having a parameter value received from a source and a data quality value, the data quality value indicating at least one of the source of the parameter value and a reliability of the parameter value; and
a server computing device (215) coupled in signal communication with the controller and configured to:
acquire the operating parameter from the controller; and
process the operating parameter based at least in part on the data quality value.

2. A system (200) in accordance with claim 1, wherein the operating parameter is a first operating parameter having a first parameter value and a first data quality value, and the server computing device (215) is further configured to:
assign a first weight to the first operating parameter based on the first data quality value;
assign, to a second operating parameter including a second parameter value and a second data quality value, a second weight based on the second data quality value; and
calculate a calculated operating parameter based at least in part on the first weight, the first parameter value, the second weight, and the second parameter value.

3. A system (200) in accordance with any preceding claim, wherein the operating parameter is a first operating parameter having a first parameter value and a first data quality value, the system further comprising a user computing device (210) coupled in signal communication with the server computing device (215) and configured to:
receive the first operating parameter from the server computing device; and, display, via a presentation device (515), a graphical representation of the first operating parameter based at least in part on the first data quality value, wherein the first operating parameter is graphically distinguished from a second operating parameter having a second data quality value.

4. A system (200) in accordance with any preceding claim, wherein the server computing device (215) is further configured to modify the data quality value of the operating parameter based on at least one of the following: a modification of the parameter value by an operator of the server computing device, a communication delay, a communication outage, the parameter value being outside a reasonable value range, and the parameter value exceeding an alarm threshold value.

5. A system (200) in accordance with any preceding claim, wherein the server computing device (215) is further configured to:
acquire an operating parameter from the controller (220) at a plurality of times;
and
if acquiring an operating parameter fails at a first time of the plurality of times, transmit an operating parameter acquired at a previous time with a data quality value of stale.

6. A system (200) in accordance with any preceding claim, wherein the server computing device (215) is further configured to calculate a calculated operating parameter based on a plurality of operating parameters; and
if the plurality of operating parameters includes at least one operating parameter having a data quality value of normal and at least one operating parameter having a data quality value other than normal, assign to the calculated operating parameter a data quality value of estimated.

7. A system (200) in accordance with any preceding claim, wherein the controller (220) is a first controller operatively coupled to a first wind turbine (100), the system further comprising a second controller operatively coupled to a second wind turbine, wherein the server computing device (215) is configured to calculate the calculated operating parameter based at least in part on an operating parameter from each of the first controller and the second controller.

8. A device for monitoring a wind turbine (100), the device comprising:
a communication interface (315) configured to receive a plurality of operating parameters for at least one wind turbine, each operating parameter of the plurality of operating parameters including a parameter value and a data quality value, the data quality value indicating at least one of a source of the parameter value and a reliability of the parameter value; and
a processor (405) coupled to the communication interface and programmed to process at least one operating parameter of the plurality of operating parameters based at least in part on the corresponding data quality value.

9. A device in accordance with claim 8, wherein the processor (305) is further programmed to create a graphical representation of each operating parameter based at least in part on the parameter value and the data quality value of the operating parameter.

10. A device in accordance with claim 8 or claim 9, wherein a first operating parameter of the plurality of operating parameters has a first data quality value, a second operating parameter of the plurality of operating parameters has a second data quality value different from the first data quality value, and the processor (405) is programmed to create a graphical representation of each operating parameter by creating a first graphical representation of the first operating parameter and a second graphical representation of the second operating parameter, the second graphical representation graphically distinguished from the first graphical representation.
